Europäisches Patentamt

European Patent Office

Office européen des brevets

(19)

(11) Veröffentlichungsnummer : **0 036 925**
**B2**

(12)            NEUE EUROPÄISCHE PATENTSCHRIFT

(45) Veröffentlichungstag der neuen Patentschrift :
11.01.89

(21) Anmeldenummer : 81100644.4

(22) Anmeldetag : 29.01.81

(51) Int. Cl.⁴ : **B 29 C 67/20, B 32 B 5/18,**
**B 60 K 37/00, B 60 R 21/04,**
**B 62 D 25/14**

(54) Verfahren zum Herstellen eines Schaumstoffkörpers, insbesondere Armaturentafel für Kraftfahrzeuge.

(30) Priorität : 28.03.80 DE 3012007

(43) Veröffentlichungstag der Anmeldung :
07.10.81 Patentblatt 81/40

(45) Bekanntmachung des Hinweises auf die Patenterteilung : 11.05.83 Patentblatt 83/19

(45) Bekanntmachung des Hinweises auf die Entscheidung
über den Einspruch : 11.01.89 Patentblatt 89/02

(84) Benannte Vertragsstaaten :
DE FR GB IT SE

(56) Entgegenhaltungen :
DE-A- 2 114 181
DE-A- 2 602 839
DE-B- 1 219 215
DE-B- 2 408 777
DE-B- 2 656 965
DE-B- 2 849 197
DE-B- 2 854 544
DE-U- 1 782 116
US-A- 3 088 539
US-A- 3 876 228
Prospekt "Polyurethan: Bayer" vom 1.5.71
Prospekt "Neues Kunststoffsystem Bayer-Polyu-
rethan-Integralschaum", 1.10.67
Prospekt "Kaltschaum für moderne Möbel", Fa.
Bayer, 1.11.71
"Kunststoff-Rundschau", 1963, Heft 2, Seiten 70-79
"Kunststoffe 67", 1977, Seiten 482-487

(73) Patentinhaber : Gebr. Happich GmbH
Postfach 10 02 49 Clausenbrücke 1
D-5600 Wuppertal 1 (DE)

(72) Erfinder : Henne, Helmut, Ing.grad.
Thornerstrasse 24
D-5600 Wuppertal 2 (DE)

(74) Vertreter : Rehders, Jochen
c/o Fa. Gebr. Happich GmbH Postfach 10 02 49
Clausenbrücke 1
D-5600 Wuppertal 1 (DE)

## Beschreibung

Die Erfindung bezieht sich auf einen Schaumstoffkörper, der wahlweise von einer eigenen Haut oder aber von einer aus einer Folie oder aus flüssigen Medien in der Herstellungsform gebildeten Haut umgeben ist mit einem tragenden Gerüst, welches über große Teilbereiche Durchbrüche und von einer flächigen Ausbildung abstrebende Formteile wie z. B. eine Hutze, eine Kantenleiste od. dgl. aufweist, insbesondere eine Armaturentafel für Kraftfahrzeuge.

Es ist bekannt, Schaumstoffkörper durch ein Gerüst zu verstärken, welches entweder aus einem weichen, nachgiebigen Einsatzmaterial besteht, wie Glasfasermatten oder aber aus einem starren Material, wie Metall. Beide Einsatzmaterialien ergeben sehr unterschiedlich stabile Schaumstoffkörper, wobei abgesehen von sonstigen, noch anzuführenden Nachteilen, die in sehr engen Grenzen sich ergebende Größe der Stabilität nicht optimal den verschiedenen Aufgaben solcher Schaumstoffkörper anzupassen ist.

So beschreibt die DE-AS 2 854 544 ein Verfahren für ein faserverstärktes Schaumformteil, welches nur darauf abgestellt ist, die Schwierigkeit zu lösen, die Festigkeitswerte des Schaumformteiles mit relativ wenig Einsatzmaterial zu erreichen, so daß auch großformatige Teile mit ausreichender Festigkeit hergestellt werden können. Daß die Schwierigkeiten groß und die angegebenen Lösungen kompliziert sind, ist dem in dieser Schrift wiedergegebenen Stand der Technik zu entnehmen. Erfahrungsgemäß kann hierzu angeführt werden, daß auch diese Lösung nur wenige Erfordernisse erfüllen kann und die Festigkeit, insbesondere jedoch die Formbeständigkeit und die allgemeine Stabilität, wie Tragfähigkeit, nur bei bestehenden geringen Forderungen erfüllt werden kann.

Größere Gebrauchswerte dagegen weist ein Schaumformteil immer dann auf, wenn die Armierung die geforderten Werte bereits besitzt. Ein solches Schaumformteil zeigt die DE-OS 2 408 777. Es handelt sich dabei um eine Kraftfahrzeuginstrumententafel mit einer Blecheinlage. Die Blecheinlage ist vollflächig ausgebildet, so daß ihr vom Material und den speziellen Ausformungen her die notwendige Tragfähigkeit gegeben werden kann, die die Grundlage für die weiteren vorstehend angegebenen Forderungen bildet.

Nun gibt es bei solchen vollflächigen Blechgerüsten aber viele Nachteile, die insbesondere bei Schaumformkörpern für die Automobilherstellung auftreten. Einmal ist es das Gewicht selbst, denn das Blechgerüst einer Instrumententafel ist gegenüber anderen Armierungen, wie Glasfasern, bei einem Kraftfahrzeug mittlerer Größe etwa 2 kg schwerer. Die adhäsive Verbindung des Schaumes und auch die einer Deckfolie mit dem Blechteil ist nicht ohne weiteres möglich, hier müssen Haftvermittler eingeschaltet werden oder viele Durchtrittsöffnungen im Blech zur Verankerung des Schaumes vorgesehen sein. Hinterschneidungen in der Herstellungsform sind wegen der Starrheit des Bleches nicht möglich (keine Entformung). Geht man von einer Instrumententafel aus, so verlangt das Gerüst außerdem ein gut verformbares und tiefziehfähiges und somit teures Einsatzmaterial. Die Herstellungsform für dieses einstückige Blechteil ist groß und somit teuer. Außerdem sind zum Herstellen große Pressen und oft aus mehreren Stufen gebildete lange Taktzeiten notwendig. Einen Ausweg hieraus gibt es, indem das Gerüst aus mehreren Teilen gebildet wird. Dieser kleine herstellungstechnische Vorteil wird jedoch wieder aufgehoben, weil die Einzelteile vorher verbunden, zumeist verschweißt werden müssen.

Der DE-B-2 656 965 ist der Hinweis zu entnehmen, als tragendes Gerüst für eine Armaturentafel ein Drahtgitter einzusetzen. Ein solches Gerüst besteht jedoch aus einer Vielzahl von Drahtabschnitten, die zusammengesetzt und im allgemeinen durch Schweißen miteinander verbunden werden müssen. Auch dürfte es bei einem aus einem Drahtgitter gebildeten Gerüst zumindest äußerst schwierig sein, Bereiche unterschiedlicher Formstabilität vorzusehen.

Es ist Aufgabe der Erfindung, einen armierten Schaumstoffkörper, wie eine Armaturentafel für ein Kraftfahrzeug zu schaffen, welcher einfach hergestellt werden kann, dessen Gerüst weitgehend genau auf die zumeist bereichsweise bezogenen Anforderungen abgestimmt ist und zu der allgemeinen Forderung, Kraftfahrzeuge leichter zu gestalten, einen Beitrag bildet.

Die Aufgabe wird dadurch gelöst, daß das Gerüst für den zu bildenden Schaumstoffkörper in flächiger Aufteilung und bereichsweiser Anordnung aus harten, formstabilen metallenen Gerüstteilen besteht, deren aus der bereichsweisen Anordnung gebildete Zwischenräume zumindest größtenteils und im wesentlichen vollflächig mit weichen, insbesondere flächig nachgiebigen Gerüstteilen überbrückt sind, wobei die Durchbrüche des Schaumstoffkörpers von beiden Gerüstteilarten freigehalten sind. Die flächig nachgiebigen Gerüstteile sind dabei Vliese oder Matten in textiltechnischer Bindung, wie Gewebe oder Gewirke.

Praxisgemäß kann man davon ausgehen, daß ein Schaumformteil, zumindest ein größeres, bereichsweise unterschiedliche Aufgaben erfüllen muß. Diese sind einmal, beispielsweise bei einer Armaturentafel feste, nicht nachgiebige und weitgehend tragfähige Bereiche, bei denen auch eine Ein- bzw. Ausreißfestigkeit sehr wohl wesentlich ist. Diese Bereiche sind erfahrungsgemäß immer in der Minderzahl und auch nur auf kleine Flächen beschränkt. Für diese wenigen und kleinen Bereiche müßte dann Blech verwendet werden, dessen Gewicht, insgesamt gesehen, nicht sonderlich zu Buche schlägt. Formstabile Gerüstteile sind natürlich nicht ausschließlich aus Blech herstellbar, hart und formstabil können auch Kunststoffkörper sein, so Spritzguß-, Blasform- oder im Auflege-Verfahren hergestellte Körper.

Der Einsatz von wenigen und kleinen Blechteilen erbringt aber nicht nur eine Materialersparnis und ein wesentlich geringeres Gewicht, es ergeben sich auch herstellungstechnische Vorteile. Die kleineren Blechteile lassen sich einfacher und billiger herstellen, da nur kleinere und auch relativ gesehen billigere Formen benötigt werden. Teilweise sind es nur Blechabschnitte, die vollwertig eingesetzt werden können. Als Blechqualität kann ohne jeden erkennbaren Nachteil eine geringe Qualität verwendet werden, insbesondere weil tiefgezogene Bereiche des Gerüstes nicht aus Blech hergestellt werden müssen. Die Bereiche des Gerüstes, die mit den Blechteilen abwechseln, können in vielen Fällen unarmiert sein, zumindest ist davon auszugehen, daß einzelne, wenn auch kleinere Bereiche armierungsfrei ausbildbar sind. Größere Bereiche dagegen oder auch kleinere, stärker beanspruchte Bereiche wird man in der erfindungsgemäßen Weise armieren. Hierzu kann auf für diesen Zweck bereits bekannte Materialien zurückgegriffen werden, man wird insbesondere Glasfasergebilde einsetzen, wobei deren Bindung zweckbestimmend sein wird, nämlich Gewirke für besonders stark in die dritte Dimension gehende Formteile, für die hiervon abweichenden Bereiche Gewebe oder für flache Bereiche Vliese.

Durch den bereichsweisen Aufbau des Gerüstes entsteht auch keine Mehrarbeit, insbesondere nicht, wenn es sich um ein Gerüst mit mehreren oder sogar vielen Durchbrüchen handelt. Bisher mußten die Durchbrüche als nachträgliche Ausnehmungen aus dem Vollmaterial gebildet werden und dieses ist mit besonderen Schwierigkeiten verbunden, insbesondere, wenn das Gerüstmaterial eine Glasfaser ist. Glasfasern lassen sich nämlich schlecht schneiden, die Schneidwerkzeuge werden sehr schnell stumpf, es kommt dann zu abgerissenen Trennkanten und nachfolgend zum Verreißen der Matte, so daß diese für den Einsatz unbrauchbar wird. Beim erfindungsgemäßen bereichsweisen Aufbau kann in besonders einfacher Weise die Schwierigkeit, die bei Glasfasern entsteht, überwunden werden. So ist es zweckmäßig, von Glasfaserbändern auszugehen, die zweckbestimmt eine unterschiedliche Breite aufweisen und auch eine einsatzbestimmte Bindung haben können. Mit diesen Abschnitten können Gerüstformen allgemein, insbesondere jedoch Bereiche in der dritten Dimension vollflächig in einem einfachen Auflegeverfahren und ohne Faltenbildung abgedeckt werden. Durchbrüche mit geradlinigen Kanten werden dabei einfach ausgespart.

Besonders zweckmäßig können nach dem erfindungsgemäßen Gedanken runde Durchbrüche oder solche mit teilweise gebogen verlaufenden Kanten ausgespart werden, sie können nämlich mit einem Streifen in gewirkter Bindung ohne Faltenbildung umlegt werden.

Daß sich bei dem bereichsweisen Aufbau des Gerüstes Überlagerungen ergeben, ist ein weiterer Vorteil, denn die Überlagerungen sind immer strebenförmig angeordnet und bilden dadurch eine Gerüstverstärkung.

Der Aufbau des erfindungsgemäßen Gerüstes erfolgt immer in oder auf einer entsprechenden Form, durch die es ohne weiteres möglich ist, die Teile des Gerüstes einzeln einzulegen und danach zu umschäumen. Zweckmäßiger kann es jedoch sein, wenn die formstabilen und die flächig nachgiebigen Gerüstteile zumindest teilweise und/oder bereichsweise miteinander verbunden sind. Hierzu ist es offengelassen, ob die Gerüstteile alle oder teilweise vorher, also vor dem Einlegen in die Form verbunden sind oder ob die Verbindung nach dem richtigen Plazieren in der Form vorgenommen wird.

Zur geeigneten Verbindung der einzelnen Gerüstteile können diese außer ihrer der Armierung des Schaumstoffteiles dienenden Form, weitere körperliche Ausgestaltungen, wie Durchbrüche, an den Rändern angeordnete Nasen, Einbuchtungen oder aus der allgemeinen Fläche ausgestellte Nocken oder Laschen aufweisen, welche dann zweckmäßigerweise als Justieranschläge mit der Herstellungsform und/oder der Herstellungsform zugeordneten gesonderten Anlagen oder Anschlägen zusammenwirken.

Bisher ist davon ausgegangen worden, daß der Schaumstoffkörper keine gesonderte Außenhaut aufweist und die geschlossene Oberfläche unbearbeitet oder aber aufgewertet, beispielsweise durch Auftragen einer flüssigen Masse, die eine Haut bildet oder mit einer Beflockung versehen, eingesetzt wird. Insbesondere wird man jedoch die Sichtseite des Schaumstoffkörpers mit einer Folie versehen, entweder einer, die die endgültige Form des Schaumteils bereits aufweist oder einer, die in der Form ausgebildet wird, wobei die Durchbrüche des Schaumstoffkörpers, zumindest teilweise mit der die Haut bildenden Folie überspannt sind, wobei die Haut über einen Falz vertieft in die Durchbrüche einragt, derart, daß die von der Fläche abstehende Wandung der Falz einen Anschlag für die Lagebegrenzung des Gerüstes ist. Durch diese Ausbildung werden Teile der Haut, die später entfernt werden, herangezogen, Anschläge für die ortsrichtige Festlegung von Teilen des Gerüstes zu bilden.

Herstellungstechnisch, aber auch anwendungstechnisch kann es von Vorteil sein, wenn das Gerüst zumindest bereichsweise mit Abstand (ca. 2 mm oder mehr) von den umlaufenden Kanten des Gerüstes und/oder den Kanten der Durchbrüche des Schaumstoffkörpers endet. Herstellungstechnisch, weil es einfacher ist, die deckungsgleichen Kanten von Durchbrüchen und Armierung zu vernachlässigen, anwendungstechnisch, weil es vielfach zweckmäßig ist, die Durchbrüche zur Aufnahme von Instrumenten, Düsen od. dgl. elastisch zu gestalten, so daß eine Anpassung leichter und eine Verbindung zweckmäßiger, beispielsweise eine Klipsverbindung vorgenommen werden kann.

Auf der Zeichnung ist die Erfindung in mehreren Ausführungsbeispielen dargestellt. Es zeigt

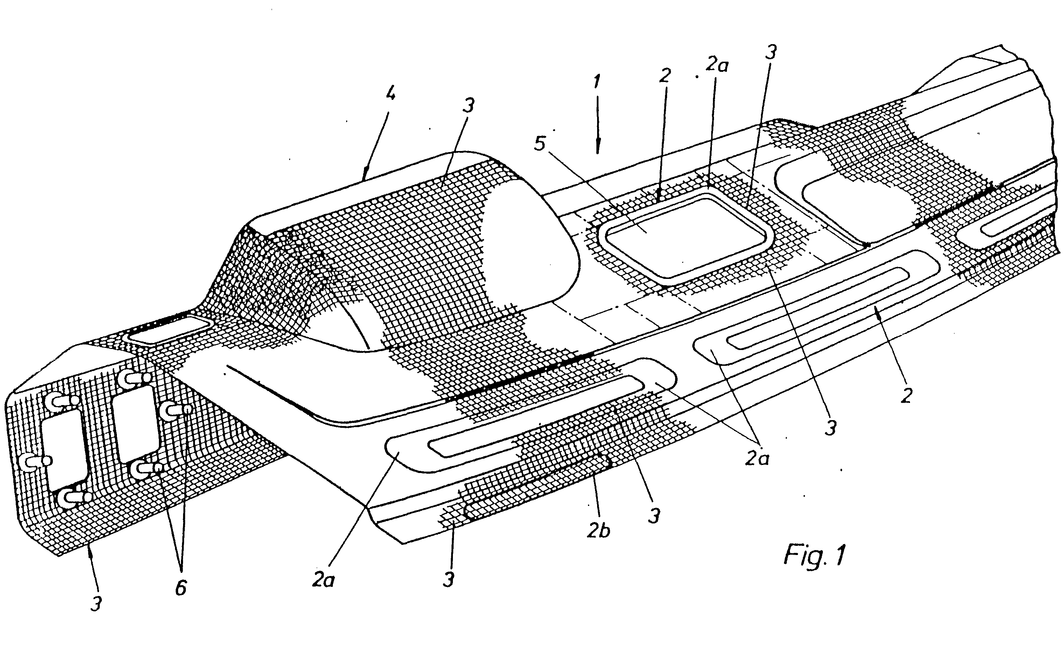

Figur 1 eine schaubildliche Darstellung einer Armaturentafel,

Figur 2 ein Teilstück einer Armaturentafel mit einer Befestigungsausbildung,

Figuren 3, 4 und 5 Verbindungen von Gerüstteilen im Schnitt und

Figur 6 ein Teilstück einer vorgeformten Folie mit einem Gerüstteil im Schnitt.

Die Armaturentafel 1 besteht aus vielen noch anzuführenden Gerüstteilen, von denen die hart eingestellten, generell mit 2 und die weich eingestellten ebenfalls generell mit 3 bezeichnet sind. Hart eingestellte Gerüstteile 2 sind in diesem Ausführungsbeispiel im wesentlichen ein Rahmen 2a und eine Kantenleiste 2b. Während es teilweise offen gelassen ist, ob die Gerüstteile 2 und 3 nur aneinanderstoßen oder mit einem geringen Spalt voneinander entfernt sind, zeigt der in Schaurichtung unten liegende Rahmen 2a eine bereichsweise Überdeckung mit weichen Gerüstteilen 3. Die Kantenleiste 2b dagegen ist vollflächig mit einem weichen Gerüstteil 3 überdeckt. Eine Hutze 4, die für die Instrumentenaufnahme bestimmt ist, zeigt in ihrem seitlichen Bereich eine Doppelung von weichen Gerüstteilen 3. Im mittleren Bereich der Armaturentafel 1 ist strichpunktiert dargestellt, wie Gerüstteile 3 in zweckmäßig kleineren und einfach gestalteten Formabschnitten einen Durchbruch 5 umgreifen. Es ist ersichtlich, daß hierzu Längs- bzw. Querstücke von Gerüstteilen 2 bzw. 3 eingesetzt sind, die etwa kantengleich mit den Kanten des Durchbruches 5 abschließen und in ihrer Breite so abgestimmt sind, daß sie an Kanten der Armaturentafel 1 oder aber an sonstigen Ausformungen, wie der Hutze 4 enden. In Schaurichtung links zeigt die Armaturentafel 1 Befestigungselemente 6, die in bekannter Weise aus Einzelteilen eingesetzt mit eingeschäumt werden oder aber Teile des Schaumes selbst sind.

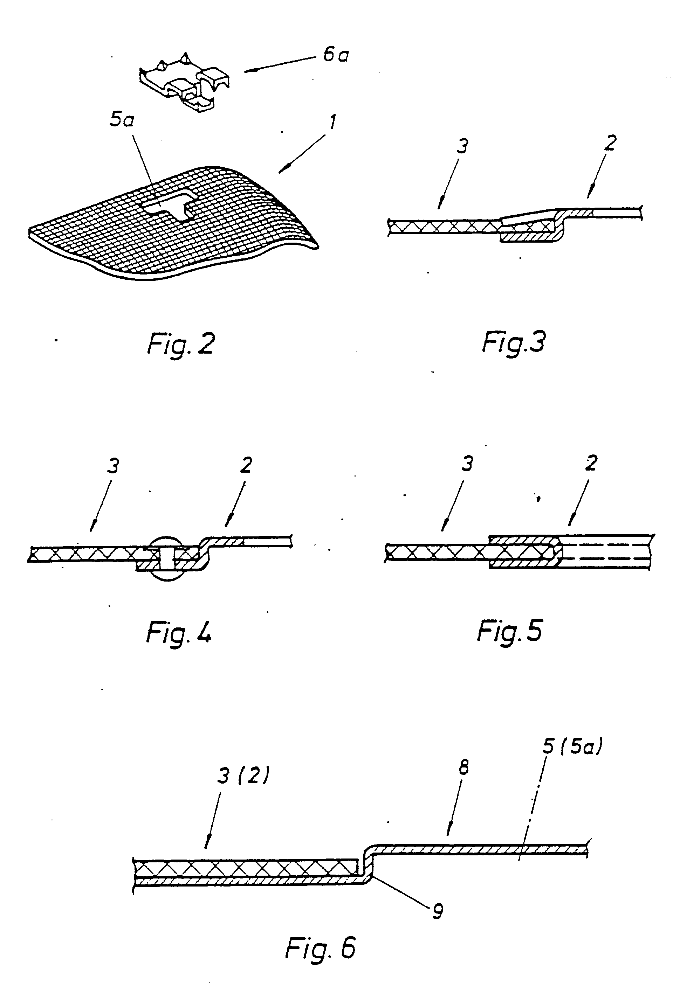

Fig. 2 zeigt ein Teilstück einer Armaturentafel 1 mit einem Durchbruch 5a für ein Befestigungselement 6a, welcher sowohl ausgespart als auch nachträglich eingebracht werden kann.

Fig. 3, 4 und 5 zeigen Ausführungsbeispiele von festen Verbindungen zwischen dem hart eingestellten Gerüstteil 2 und dem weich eingestellten Gerüstteil 3. Beim Beispiel der Fig. 3 wird man von einem Gerüstteil 2 aus Blech ausgehen, bei dem eine dreiseitig freigeschnittene Lasche gegen einen Randbereich des Gerüstteiles 2 abgebogen ist und ein Gerüstteil 3 zwischen sich einklemmt. Bei den Ausführungen nach Fig. 4 und 5 sind für das Gerüstteil 2 auch andere Materialien als Blech verwendbar. Fig. 4 zeigt eine Verbindung der Gerüstteile 2 und 3 durch ein weiteres Bauteil, hier ein Niet. Bei Fig. 5 handelt es sich um einen Einschub des Gerüstteiles 3 in eine U-förmige Rinne des Gerüstteiles 2, wobei ein gewisser Preßsitz möglich ist.

Fig. 6 zeigt eine vorgeformte Folie 8, welche im Bereich eines nicht voll dargestellten Durchbruches 5 bzw. 5a über einen Falz 9 nach innen versetzt ausgebildet ist. Der Falz 9 bildet, wie ersichtlich, einen Anschlag für ein Gerüstteil 3, wodurch ohne weitere Ausbildung sich eine genaue Plazierung eines solchen Gerüstteiles, es kann auch ein Gerüstteil 2 sein, ergibt.

**Patentansprüche**

1. Schaumstoffkörper, der wahlweise von einer eigenen Haut (8) oder von einer aus einer Folie oder aus flüssigen Medien in der Herstellungsform gebildeten Haut (8) umgeben ist und der mit einem tragenden Gerüst (2, 3) versehen ist, welches über große Teilbereiche Durchbrüche (5, 5a) und von einer flächigen Ausbildung abstrebende Formteile, wie z.B. eine Hutze (4), eine Kantenleiste (2b) od. dgl., aufweist, insbesondere eine Armaturentafel (1) für Kraftfahrzeuge, dadurch gekennzeichnet,

a) daß das Gerüst (2, 3) aus harten, formstabilen, metallenen Gerüstteilen (2, 2a, 2b) und aus weichen, insbesondere flächig nachgiebigen Gerüstteilen (3) in Form von Vliesen oder in Form von Matten in textiltechnischer Bindung, wie Gewebe oder Gewirke, besteht,

b) daß die harten Gerüstteile (2, 2a, 2b) bereichsweise unter Freilassen von flächigen Zwischenräumen angeordnet sind,

c) daß die aus der bereichsweisen Anordnung der harten Gerüstteile (2, 2a, 2b) gebildeten Zwischenräume zumindest größtenteils und im wesentlichen vollflächig mit den weichen Gerüstteilen (3) überbrückt sind und

d) daß die harten Gerüstteile (2, 2a, 2b) einerseits und die weichen Gerüstteile (3) andererseits so positioniert sind, daß die Durchbrüche (5, 5a) von beiden Gerüstteilarten freigehalten sind.

2. Schaumstoffkörper nach Anspruch 1 dadurch gekennzeichnet, daß die formstabilen und die flächig nachgiebigen Gerüstteile (2 bzw. 3) zumindest teilweise und/oder bereichsweise miteinander verbunden sind.

3. Schaumstoffkörper nach Anspruch 1 oder 2 dadurch gekennzeichnet, daß die formstabilen Gerüstteile (2, 2a, 2b) außer ihrer der Armierung des Schaumstoffteils dienenden Form eine weitere körperliche Ausgestaltung, wie Durchbrüche (5), an den Rändern angeordnete Nasen, Einbuchtungen oder aus der allgemeinen Fläche ausgestellte Nocken oder Laschen aufweisen.

4. Schaumstoffkörper nach einem oder mehreren der vorangehenden Ansprüche, dadurch gekennzeichnet, daß die Sichtseite des Schaumstoffkörpers mit einer aus einer Folie vorgefertigten, die endgültige Form des Schaumteiles bereits aufweisende Haut (8) überdeckt ist, daß die Durchbrüche (5, 5a) des Schaumstoffkörpers zumindest teilweise mit der Haut (8) überspannt sind und daß die Haut (8) über einen Falz (9) vertieft in die Durchbrüche (5, 5a) einragt, derart, daß die von der Fläche abstehende Wandung der Falz (9) einen Anschlag für die Lagebegrenzung des Gerüstes (2, 3) ist.

5. Schaumstoffkörper nach einem oder mehreren der vorangehenden Ansprüche, dadurch gekennzeichnet, daß das Gerüst (2, 3) zumindest bereichsweise mit Abstand (ca. 2 mm oder mehr) von den umlaufenden Kanten des Schaumstoffkörpers und/oder den Kanten der Durchbrüche (5, 5a) des Schaumstoffkörpers endet.

## Claims

1. A foamed plastics body covered either by its own skin (8) or by a skin (8) formed by a foil or by a liquid substance introduced into the production mould, the body being provided with a support trestle (2, 3) having, over substantial parts of its surface, openings (5, 5a) and shaped parts deviating from a plane surface, for example a scoop (4), an edge fillet (2b) or the like, particularly a dashboard (1) for a motor vehicle, characterized in

a) that the trestle (2, 3) comprises hard and inherently stable metallic trestle portions (2, 2a, 2b) and soft, particularly areally resilient, trestle portions (3), such as a fleece or a mat of a textile texture, for example a woven fabric or a looped fabric ;

b) that the hard trestle portions (2, 2a, 2b) are sectionally arranged so as to leave areal interstices between them ;

c) that at least the major part of the interstices resulting from the sectional arrangement of the hard trestle portions (2, 2a, 2b) is bridged substantially holohedrally by the soft trestle portions (3) ; and

d) that the hard trestle portions (2, 2a, 2b), on the one hand, and the soft trestle portions (3), on the other hand, are positioned in such a manner that the openings (5, 5a) are not covered by either type of trestle portions.

2. A foamed plastics body according to claim 1, characterized in that the stable and the areally resilient trestle portions (2 and 3 respectively) are at least partially and/or sectionally joined to each other.

3. A foamed plastics body according to claim 1 or claim 2, characterized in that the stable trestle portions (2, 2a, 2b) are provided, in addition to their respective shapes serving to support the foamed plastics, with other three-dimensional additions such as said openings (5), lips arranged at their edges, recesses or dogs or tongues projecting from the main surface.

4. A foamed plastics body according to any one or more of the preceding claims, characterized in that the visible surface of the plastics body is covered with a skin (8) prefabricated from a foil and being shaped already to correspond to the final shape of the foamed plastics, that the openings (5, 5a) of the plastics body are at least partially covered by the skin (8), and in that the skin (8) dished by means of a rebate (9) extends into the openings (5, 5a) such that the face of the rebate (9) protruding from the surface forms a stop for determining the position of the trestle (2, 3).

5. A foamed plastics body according to any one or more of the preceding claims, characterized in that at least sections of the trestle (2, 3) terminate at a distance (about 2.0 mm or more) from the peripheral edges of the plastics body and/or from the edges of the openings (5, 5a) of the plastics body.

## Revendications

1. Corps de mousse entouré au choix, soit par sa propre peau, soit encore par une peau (8) formée par une pellicule ou des milieux liquides dans le moude de fabrication, avec une armature-support (2, 3) qui comporte sur des zones importantes des évidements (5, 5a) et des parties moulées en relief sur une configuration d'ensemble plane, comme par exemple une calotte (4), une baguette (2b) de bordure ou analogue, notamment un tableau de bord (1) pour véhicules automobiles, caractérisé en ce que

a) l'armature (2, 3) comprend des composants métalliques durs indéformables (2, 2a, 2b) et des composants d'armature souples (3) notamment d'une conformation déformable en surface, sous forme de feutres ou sous forme de treillis d'une armature obtenue par technique textile, comme des tissus à chaîne ou des tissus à mailles,

b) les composants d'armature durs (2, 2a, 2b) sont disposés par zones avec des intervalles de surface,

c) les intervalles formés par la disposition par zones des composants d'armature durs (2, 2a, 2b) sont comblés au moins en majeure partie et pratiquement en surface continue par les composants d'armature souples (3), et

d) que les composants d'armature durs (2, 2a, 2b) d'une part et les composants d'armature souples (3) d'autre part sont positionnés de telle manière que les évidements (5, 5a) sont laissés dégagés par les deux types de composants d'armature.

2. Corps de mousse selon la revendication 1, caractérisé en ce que les éléments d'armature indéformables et les éléments déformables en surface (2 et 3) sont reliés entre eux au moins partiellement et/ou dans certaines zones.

3. Corps de mousse selon la revendication 1 ou 2, caractérisé en ce que les éléments indéformables (2, 2a, 2b) présentent, en dehors de leur forme servant à l'armature de la partie en mousse, une autre conformation tridimensionnelle, telle que des ouvertures (5), des ergots disposés aux bords, des dentelures ou des saillies ou languettes ressortant de la surface générale.

4. Corps de mousse selon une ou plusieurs des revendications précédentes, caractérisé en ce que le côté visible dudit corps en mousse est recouvert d'une peau (8) préfabriquée à partir d'une pellicule, présentant déjà la forme finale de la pièce en mousse, en ce que les ouvertures (5, 5a) du corps en mousse sont comblées au moins en partie par la peau (8) et en ce que la peau (8) pénètre en s'enfonçant par un pli (9), dans les ouvertures (5, 5a) de sorte que la paroi du pli (9) opposée à la surface est une butée limitant la position de l'armature (2, 3).

5. Corps de mousse selon l'une ou plusieurs des revendications précédentes, caractérisé en ce que l'armature (2, 3) se termine au moins sur certaines zones à distance (environ 2 mm ou plus) des bords périphériques du corps en mousse et/ou des bords des ouvertures (5, 5a) du corps en mousse.

Fig. 1

EP 0 036 925 B2

Fig. 2

Fig.3

Fig. 4

Fig.5

Fig. 6